# EUROPEAN PATENT SPECIFICATION

(11) **EP 0 941 416 B1**
(45) Date of publication and mention of the grant of the patent: **21.05.2003**
(21) Application number: 97913300.6
(22) Date of filing: 26.11.1997
(51) Int. Cl.: F16C 39/06

(54) **IMPROVEMENTS IN AND RELATING TO MAGNETIC BEARINGS**
MAGNETLAGER
AMELIORATIONS APPORTEES A DES PALIERS MAGNETIQUES OU LES CONCERNANT

(30) Priority: 27.11.1996 GB 9624587
(43) Date of publication of application: 15.09.1999
(73) Proprietor: British Nuclear Fuels PLC, Warrington, Cheshire WA3 6AS (GB)
(72) Inventor: JEWELL, Geraint, Wyn, Sheffield S3 7NJ (GB); HOWE, David, Sheffield S11 9RA (GB)
(74) Representative: Pawlyn, Anthony Neil
(86) International application number: GB9703170
(87) International publication number: WO98023876

(56) References cited:
- EP-A- 0 109 896
- WO-A-94/20767
- PATENT ABSTRACTS OF JAPAN vol. 9, no. 92 (M-373) [1815] , 20 April 1985 & JP 59 217013 A (NIPPON SEIKO)

## Description

This invention concerns improvements in and relating to magnetic bearings, particularly, but not exclusively, for high temperature applications.

Magnetic bearings have a number of advantages over other bearing types. In particular they possess long service life, zero starting friction, low losses and most importantly do not require lubricants. These advantages are particularly apparent in high speed and / or high temperature environments.

Magnetic bearings can also serve other functions, such as a variable damper unit. A magnetic bearing operated in this mode is provided to enable the effective stiffness of the shaft to be varied rather than to support its weight. The shaft stiffness may be varied, or even switched essentially instantaneously, thus skipping through critical speeds in the system.

To date magnetic bearing systems capable of operating upto 450°C only have been produced. Magnetic bearings capable of operating at higher temperatures are desirable for a number of applications, including; gas turbine bearings for power generation; and aircraft engines to allow for direct power generation from the jet so as to avoid mechanical links such as belts/chains which have a lower service life. Such a magnetic bearing will, however, need to operate successfully at a temperature in excess of 600°C and preferably at greater than 800°C. No such a system has yet been provided.

High temperatures have a number of significant effects on the behaviour and performance of magnetic bearings and their associated components.

The majority of magnetic materials, such as iron based ones, cross their Curie temperature (the point at which the material becomes non-magnetic) well below the desired performance envelope. Most iron based alloys have Curie temperatures in the range 650-700°C and so can only operate at 550-600°C as their limit. Additionally, even below the Curie temperature the saturation flux for the magnetic material tends to tail off; the value at room temperature may be 150% the value at 450°C.

The resistivity of the materials used for the windings also increases considerably with temperature. As a consequence lower current densities must be applied. Otherwise the resistance heating, coupled with the ambient environment, causes the windings to approach their melting point, 1050°C for Cu, giving rise to structural failure of the windings. Similar factors apply to the heating of the magnetic material itself as this too is close to the limit, its Curie temperature. The lower current density has significant implications in the level of force which can be obtained and as a consequence on the physical size of the unit.

Two principal forces are involved in the system. Firstly there is the control/position force which is necessary to regulate the position of the shaft during use. Additionally, if the bearing is to support the weight, a relatively constant biasing force must be applied to the shaft to counteract its mass. The first force may be commonly double the latter, although the ratio may vary significantly between different applications. A far higher regulation force is employed in high speed applications or uses where the bearing is mobile, for instance aerospace applications.

Conventional bearings comprise a plurality of poles around the perimeter of the shaft, provided in as simple a structure as possible. The uppermost poles provide the biasing force and also contribute to the regulation. These upper poles are operated to their maximum performance within the environmental constraints in prior art systems. The other poles are provided in a symmetrical arrangement and as a consequence are substantially under used as they are only involved in regulation.

Prior art bearings including a plurality of sets of poles and soft magnetic material together with electrically conductive winding are exemplified in WO-A-9420767, JP-A-59217013 and EP-A-0109896.

According to a first aspect of the invention we provide a magnetic bearing for a shaft comprising a plurality of sets of poles of soft magnetic material, together with an electrically conductive winding, a biasing pole set is provided, at least the biasing pole set being asymmetrical relative to the others, the biasing pole set being provided with a larger slot area than one or more of the other sets.

Other potential features for the invention include:-

Preferably all the pole sets are decoupled from one another. Preferably four pole sets are provided.

Preferably one or more of the pole sets comprises a central pole together with two side poles. Preferably the side and central poles are connected by a bridging element. The central pole maybe provided as a linear element.

Preferably the gap between the side and central poles reduces towards the shaft. Preferably the gap has a substantially constant width portion and a tapering portion. Preferably the tapering portion is closer to the shaft than the constant width portion. The reduced gap may be defined by a portion of the side pole angled towards the central pole. The constant gap portion may be defined by a portion of the side pole substantially parallel to the central pole.

Preferably the gap between the shaft and opposing surface of the poles is less than 10mm, for instance between 0.1 and 1.0mm.

Preferably the gap between the poles of a set is less than 5mm, for instance between 0.5 and 10mm at its minimum. The gap may be at least 5 times the gap between shaft and opposing surface of the poles.

Preferably the gap between poles of adjoining sets is equivalent to that between poles of a set, for instance 0.5 to 5mm at its minimum.

Preferably the bridging portion is substantially perpendicular to the portion of the central pole and/or the portion of the side poles connected to it.

The side and central poles may be moveable relative to one another in a manner to increase the minimum gap between them. This may be effected by detaching the side poles from the central pole and/or bridging portion. Alternatively other movement maybe facilitated, such as a sliding increase in separation or rotation of one component relative to another or other mode.

Preferably the windings are provided on the central pole in prewound form. The windings may support themselves or be provided on a carrier/support. Alternatively the windings maybe wound directly onto the pole or a support provided thereon.

Preferably the slot area is greater than the slot area of any of the other pole sets. The biasing slot area maybe up to 500% that of the other slot areas. Ratios of 4:1 or less, more preferably 3:1 or less and even 2:1 or less bias : regulation coil area are envisaged. The increased slot area may arise as a result of a greater gap between the central and side poles and/or because of a greater radial extent of the poles.

The uppermost pole set may extend further axially than one or more, and most preferably all, of the other pole sets. The axial increase in extent may be at least 30%, at least 40%, at least 50% or even up to 300% that of the other pole sets.

Preferably the magnetic bearing functions at temperatures in excess of 650°C, more preferably in excess of 700°C and ideally in excess of 800°C or even 900°C. Even at ambient or moderately elevated temperatures the invention provides significant advantages, for instance in terms of reduced overall weight.

The soft magnetic material may comprise or be cobalt. Preferably a cobalt alloy is employed. 20% or greater, 45% or greater and even 95% cobalt alloys maybe employed. A cobalt content of between 20 and 35% is preferred. The cobalt may be alloyed with one or more of iron, chromium, vanadium or tantalum Ta.

The soft magnetic material may comprise iron, iron alloys, iron silica alloys, iron nickel alloys and other such materials, particular where ambient or moderately elevated temperatures are concerned.

The windings may be of copper, silver or alloys thereof, such as beryllium copper. The principal conducting material of the winding maybe coated with a further layer for support, such as by stainless steel or ceramic. An insulating layer of ceramic or braid may be provided, which layer may also provide support.

The windings may be provided with varnish, plastics, polyester or other insulating materials, particularly where ambient or moderately elevated temperatures only are encountered.

The level of windings provided may equate to a packing factor of at least 20% and preferably of at least 50% or even 70% or greater.

According to a second aspect of the invention we provide a method of bearing or damping a shaft comprising one or more magnetic bearings for the shaft, one or more of the magnetic bearings comprising a plurality of sets of poles of soft magnetic material, together with electrically conducting windings, a biasing pole set being provided, at least the biasing pole set being asymmetrical relative to the others, the biasing pole set being provided with a larger slot area than one or more of the other sets.

Preferably the lower current density is applied to the biasing and / or upper pole set.

Various embodiments of the invention will now be described, by way of example only, and with reference to the accompanying drawings in which :-
Figure 1 shows a prior art bearing assembly;
Figure 2 shows a bearing assembly according to a first embodiment of the present invention;
Figure 3a shows a side view of a pole pair in a second embodiment of the present invention;
Figure 3b to 3d show partial views of further embodiments of poles; and
Figure 4 shows a comparison of a pole set between a prior art bearing system and a bearing system according to the present invention.

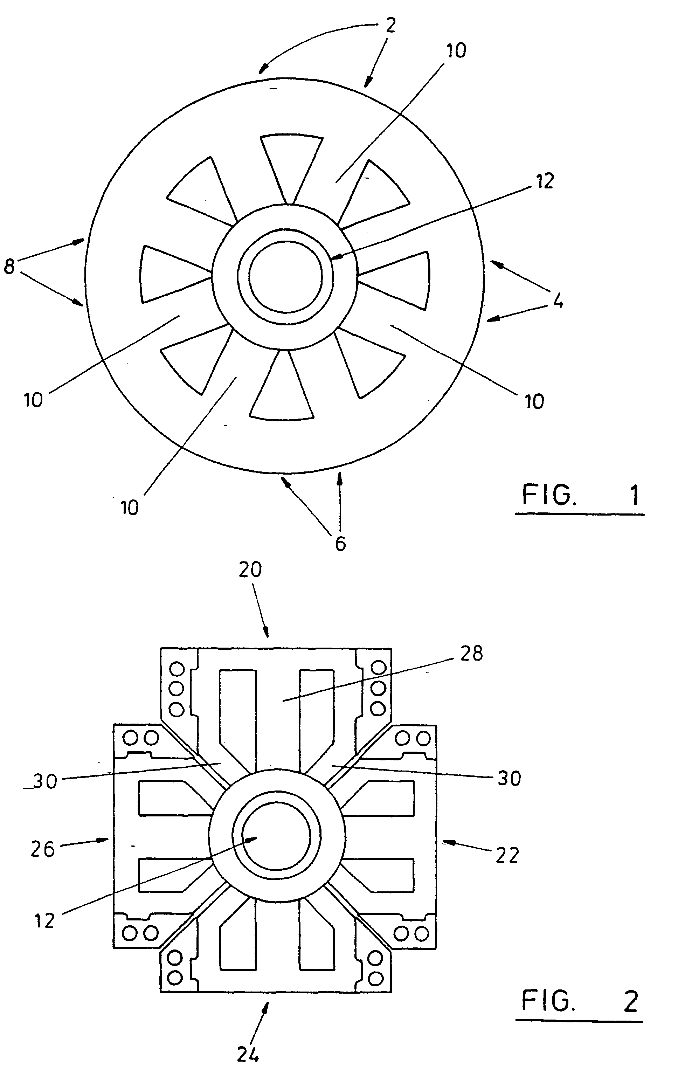

Typical radial magnetic bearings according to the prior art, designed to operate well below 500°C, follow the simple configuration illustrated in Figure 1. The bearing provides four pairs of poles, 2,4,6,8, respectively in an integral structure. The pairs each consist of two poles 10 wound with series connected coils, the coils being provided in opposite senses. The four pairs provide control in both the vertical and horizontal axes for the shaft 12.

As the upper most pair of poles 2 must provide both the upward force and a regulating force it is operated to its full capacity. However, the other three pairs 4, 6, 8 need only provide the regulating force. As a result they are substantially under used.

The system contains excess weight and volume as a result. The under utilisation of the other three pairs 4, 6, 8 is even more extreme as these coils are only contributing for a small proportion of the time, as and when regulatory force is required. The upward force on the other hand is required continuously. These wasteful characteristics become even more significant at high temperatures.

The embodiment of the invention illustrated in Figure 2 provides four decoupled magnetic circuits 20,22,24,26 enclosing a shaft 12. The circuits each consist of a central pole 28 and two side poles 30. In the case of the uppermost circuit 20 the poles are 50% longer in the radial direction than in the other circuits. The poles may also extend further in an axial direction than the other poles. This additional slot area is used to accommodate the additional windings needed to provide the biasing force. The extra windings available allow the level of losses sustained to be reduced as the biasing windings can successfully be operated at a current density approximately halve that of the regulation windings.

The soft magnetic materials suitable are restricted by the Curie temperature which needs to ideally be significantly higher than the operating temperature. Cobalt, with the highest known Curie temperature 1121°C, and its alloys are particularly suited.

Suitable materials include: 24% Co, 75.25% Fe, 0.75% Cr; 49%Co,, 49% Fe, 2%V; 49% Co, 50.65% Fe, 0.35% Ta; 95% Co, 5% Fe. Telcon Limited offer one such suitable material under the trade mark Totelloy 5. For lower temperature applications iron alloys, such as silicon iron laminates may be employed.

The circuits in this embodiment are wound with coated wires threaded through the gaps. A variety of potential winding materials and constructions are possible. Pure copper wires can be coated in an alumina ceramic dried and cured. The wires may be wound dry and heat cured in their wound state. The ceramic itself can provide the necessary insulation or a woven braid may be introduced around the wire. Alternatively the copper wires can be coated in stainless steel and / or nickel with an outer insulating layer also provided. More conventional insulation can be provided in ambient or more moderate temperature applications.

Whilst this embodiment is described in relation to the magnetic bearing supporting the weight of the shaft 12, the term magnetic bearing also encompasses situations where the magnetic force merely provides a control function to the shaft, for instance damping in a regulatory way. Support for the weight in such situations may be provided by conventional mechanical bearing systems and / or prior art magnetic bearings.

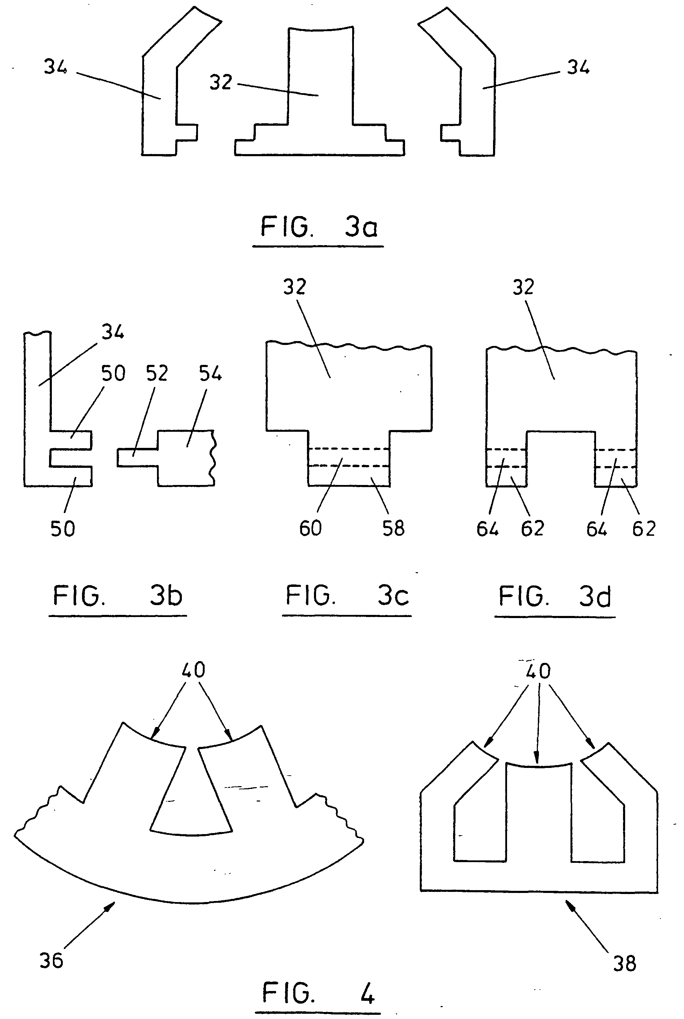

The second embodiment of the invention illustrated in Figure 3 provides the central pole 32 and side poles 34 of each circuit as separate components. This enables the windings for the poles to be prewound onto a carrier or bobbin and then inserted over the central pole 32. The side poles 34 can then be fastened to the respective sides of the central pole 32 to complete the circuit.

Figure 3b, 3c and 3d illustrate further alternatives for mounting the central pole or a support therefore, directly to the side poles or to a support therefore. Figure 3b provides a side pole 34 with two laterally extending arm portions 50 between which a single arm portion 52 on a support element 54 to which the central pole (not shown) can be attached, is inserted.

Figure 3c illustrates a central pole 32 provided with a protrusion 58 at its base. This protrusion 58 is designed to be accommodated within a similarly dimensioned gap on the support or on an element extending from the side pole (not shown) with pins being inserted into aperture 60 to fix the pole in location.

A further possibility is illustrated in Figure 3d where two side protrusions 62 are provided on the central pole 32, with a protrusion on the support (not shown) extending into the gap therebetween. Once again pins can be introduced into apertures 64 to fasten the system in its assembled state.

This option enables the advantages, such as higher packing factors, of pre-winding to be obtained. Pre-winding is not feasible with some systems as the gaps between the poles preclude the insertion of sufficient windings. The side poles and central pole are connected together by suitable key surfaces and fasteners.

A comparison of one pole set of equivalent coupled 36 and de-coupled 38 bearings with the same pole face area 40 the same reluctance and slot area is provided in Figure 4. The slot area being defined in a radial plane relative to the shaft axis. The two systems have essentially the same force capability with the same copper losses as each other. The magnetic circuit in both cases is dimensioned to operate at a maximum flux density of 1.2T, which is approximately the limiting flux density imposed by considerations of saturation at 900°C on the soft magnetic material. The coupled arrangement 36 has a mass some 1.75 times that of the de-coupled bearing 38.

When account is taken of the fact that the other three poles of a de-coupled bearing can be considerably smaller since they only accommodate the position regulation windings, relative weight advantage is even more pronounced.

In addition to the reduction in the weight the slot shape in the de-coupled topology is likely to make the winding easier than in the coupled topology. This enables a higher copper packing factor to be realised with a consequent reduction in the copper loss of the bearings. Losses are higher normally at elevated temperatures due to the increased resistivity of the windings. A proportion of the disadvantage in terms of weight of the coupled bearing can be attributed to the fact that the back iron between the four poles is essentially redundant in terms of its role within the overall magnetic circuit.

The present invention enables the slot area to be further reduced by appreciating that the lower duty time from the regulation circuits, 4, 6, 8, enables them to be operated at a higher current density than the continuously operated upper circuit 2 without problems. Thus a two source reduction in mass is obtained firstly due to the asymmetrical pole set configuration and secondly due to the differing operating current densities used between the biasing and regulating functions.

A higher force level is also obtained in the present invention by increasing the pole area of the top bearing. The force is directly linked to this area as the saturation flux density for the soft magnetic material is the limiting factor. The effective pole area is not only increased due to the lower gaps which can be obtained between adjacent poles, but also by extending the upper circuit 2 axially, relative to the shaft. Axial extension is in some respects more effective than increasing the circumferential extent of the top bearing as the vertical component of the force decreases with the width of the angle relative to the vertical. A 50% increase in axial extent is beneficial and gives a static to dynamic force capability of 1:2 without under utilisation.

## Claims

1. A magnetic bearing for a shaft (12) comprising a plurality of sets of poles (20, 22, 24, 26) of soft magnetic material, together with an electrically conductive winding, **characterised in that** a biasing pole set (20) is provided, at least the biasing pole set being asymmetrical relative to the others, the biasing pole set being provided with a larger slot area than one or more of the other sets.

2. A magnetic bearing according to claim 1 in which at least one of the pole sets (20, 22, 24, 26) is provided decoupled from the other pole sets.

3. A magnetic bearing according to claim 1 or claim 2 in which the biasing pole set (20) is the upper pole set.

4. A magnetic bearing according to any preceding claim in which one or more of the pole sets (20, 22, 24, 26) comprises a central pole (28) together with two side poles (30).

5. A magnetic bearing according to any preceding claim in which one or more of the pole sets (20, 22, 24, 26) comprises a central pole (28) together with two side poles (30), the side and central poles are moveable relative to one another in a manner to increase the minimum gap between them.

6. A magnetic bearing according to claim 4 or claim 5 in which the increased slot area arises as a result of a greater gap between central (28) and side poles (30).

7. A magnetic bearing according to claim 4 or any claim depending thereon in which the gap between the side (30) and central (28) poles has a substantially constant width portion and a tapering portion, the tapering portion being closer to the shaft than the constant width portion.

8. A magnetic bearing according to any preceding claim in which one or more of the pole sets (20, 22, 24, 26) comprises a central pole (28) together with two side poles (30) and the windings are provided on the central pole in prewound form.

9. A magnetic bearing according to any preceding claim in which an uppermost pole set (20) is provided and the uppermost pole set is provided with a larger slot area than the slot area of any of the other pole sets (22, 24, 26).

10. A magnetic bearing according to any preceding claim in which the uppermost pole set (20) extends further axially than one or more of the other pole sets (22, 24, 26).

11. A method of bearing a shaft or of damping a shaft comprising one or more magnetic bearings for the shaft (12), one or more of the magnetic bearings comprising a plurality of sets of poles (20, 22, 24, 26) of soft magnetic material, together with electrically conducting windings, **characterised in that** a biasing pole set (20) is provided, at least the biasing pole set is asymmetrical relative to the others, the biasing pole set being provided with a larger slot area than one or more of the other sets.

12. A method of bearing a shaft according to claim 11 in which the biasing pole set (20) is the upper pole set.

13. A method according to claim 11 in which a lower current density is applied to the biasing respectively upper pole set (20).

## Patentansprüche

1. Magnetlager für eine Welle (12), das eine Mehrzahl
von Polsätzen (20, 22, 24, 26) aus weichmagnetischem Material zusammen mit einer elektrisch leitenden Wicklung umfasst, **dadurch gekennzeichnet, dass** ein Vormagnetisierungspolsatz (20) vorgesehen ist, wobei wenigstens der Vormagnetiserungspolsatz relativ zu den anderen asymmetrisch ist und der Vormagnetisierungspolsatz einen größeren Schlitzbereich als einer oder mehrere der anderen Sätze aufweist.

2. Magnetlager nach Anspruch 1, bei dem wenigstens
einer der Polsätze (20, 22, 24, 26) entkoppelt von den anderen Polsätzen vorliegt.

3. Magnetlager nach Anspruch 1 oder 2, bei dem der
Vormagnetisierungspolsatz (20) der obere Polsatz ist.

4. Magnetlager nach einem der vorhergehenden Ansprüche,
bei dem einer oder mehrere der Polsätze (20, 22, 24, 26) einen zentralen Pol (28) in Kombination mit zwei Seitenpolen (30) aufweisen.

5. Magnetlager nach einem der vorhergehenden Ansprüche,
bei dem einer oder mehrere der Polsätze (20, 22, 24, 26) einen zentralen Pol (28) in Kombination mit zwei Seitenpolen (30) aufweisen und die Seitenpole und der zentrale Pol derart relativ zueinander beweglich sind, dass die Minimallücke zwischen diesen vergrößert wird.

6. Magnetlager nach Anspruch 4 oder 5, bei dem ein
vergrößerter Spaltbereich als Ergebnis einer größeren Lücke zwischen dem zentralen Pol (28) und den Seitenpolen (30) entsteht.

7. Magnetlager nach Anspruch 4 oder einem davon abhängenden Anspruch, bei dem die Lücke zwischen den Seitenpolen (30) und dem zentralen Pol (28) einen Abschnitt mit im Wesentlichen konstanter Breite sowie einen sich verjüngenden Abschnitt aufweist, wobei der sich verjüngende Abschnitt näher an der Welle liegt als der Abschnitt mit der konstanter Breite.

8. Magnetlager nach einem der vorhergehenden Ansprüche,
bei dem einer oder mehrere der Polsätze (20, 22, 24, 26) einen zentralen Pol (28) in Kombination mit zwei Seitenpolen (30) aufweisen und die Wicklungen auf dem zentralen Pol in vorgewickelter Form bereitgestellt sind.

9. Magnetlager nach einem der vorhergehenden Ansprüche,
bei dem ein oberster Polsatz (20) bereitgestellt ist und der oberste Polsatz mit einem größeren Spaltbereich versehen ist als der Spaltbereich von irgendeinem der anderen Polsätze (22, 24, 26).

10. Magnetlager nach einem der vorhergehenden Ansprüche,
bei dem der obereste Polsatz (20) sich axial weiter erstreckt als einer oder mehrere der anderen Polsätze (22, 24, 26).

11. Verfahren zur Lagerung einer Welle oder zum Dämpfen
einer Welle, das ein oder mehrere Magnetlager für die Welle (12) umfasst, wobei eine oder mehrere der Magnetlager eine Mehrzahl von Polsätzen (20, 22, 24, 26) aus weichmagnetischem Material in Kombination mit elektrisch leitenden Wicklungen umfassen, **dadurch gekennzeichnet, dass** ein Vormagnetisierungspolsatz (20) bereitgestellt wird, wobei wenigstens der Vormagnetisierungspolsatz relativ zu den anderen asymmetrisch ist und der Vormagnetisierungspolsatz mit einem größeren Spaltbereich versehen ist als einer oder mehrere der anderen Sätze.

12. Verfahren zur Lagerung einer Welle nach Anspruch 11, bei dem der Vormagnetisierungspolsatz (20) der obere Polsatz ist.

13. Verfahren nach Anspruch 11, bei dem dem Vormagnetsierungspolsatz bzw. dem oberen Polsatz (20) eine geringere Stromdichte zugeführt wird.

## Revendications

1. Palier magnétique pour un arbre (12) comprenant une pluralité d'ensembles de pôles (20, 22, 24, 26) en matériau magnétique souple, conjointement avec un enroulement électriquement conducteur, **caractérisé en ce qu'**un ensemble de pôles magnétiques (20) est fourni, au moins ledit ensemble de pôles magnétiques étant asymétrique par rapport aux autres, ledit ensemble de pôles magnétiques étant fourni avec une zone à fentes plus grande qu'un ou plusieurs des autres ensembles.

2. Palier magnétique selon la revendication 1, dans lequel au moins un des ensembles de pôles (20, 22, 24, 26) est fourni découplé des autres ensembles de pôles.

3. Palier magnétique selon la revendication 1 ou 2, dans lequel l'ensemble de pôles magnétiques (20) est l'ensemble de pôles supérieur.

4. Palier magnétique selon l'une quelconque des revendications précédentes, dans lequel un ou plusieurs des ensembles de pôles (20, 22, 24, 26) comprend un pôle central (28) conjointement avec deux pôles latéraux (30).

5. Palier magnétique selon l'une quelconque des revendications précédentes, dans lequel un ou plusieurs ensembles de pôles (20, 22, 24, 26) comprend un pôle central (28) conjointement avec deux pôles latéraux (30), les pôles latéraux et le pôle central sont mobiles l'un par rapport à l'autre de manière à augmenter l'espace minimum entre eux.

6. Palier magnétique selon la revendication 4 ou 5, dans lequel la zone à fentes augmentée résulte d'un espace plus grand entre le pôle central (28) et les pôles latéraux (30).

7. Palier magnétique selon la revendication 4 ou l'une quelconque des revendications en dépendant, dans lequel l'espace entre les pôles latéraux (30) et le pôle central (28) a une portion de largeur sensiblement constante et une portion en entonnoir, la portion en entonnoir étant plus proche de l'arbre que la portion de largeur constante.

8. Palier magnétique selon l'une quelconque des revendications précédentes, dans lequel un ou plusieurs des ensembles de pôles (20, 22, 24, 26) comprend un pôle central (28) conjointement avec deux pôles latéraux (30) et, les enroulements sont fournis sur le pôle central sous forme préenroulée.

9. Palier magnétique selon l'une quelconque des revendications précédentes, dans lequel un ensemble de pôles terminaux (20) est fourni et l'ensemble de pôles terminaux est fourni avec une zone à fentes plus grande que la zone à fentes de l'un quelconque des autres ensembles de pôles (22, 24, 26).

10. Palier magnétique selon l'une quelconque des revendications précédentes, dans lequel l'ensemble de pôles terminaux (20) s'étend plus loin axialement qu'un ou plusieurs des autres ensembles de pôles (22, 24, 26).

11. Procédé de soutien d'un arbre ou d'amortissement d'un arbre comprenant un ou plusieurs paliers magnétiques pour l'arbre (12), un ou plusieurs des paliers magnétiques comprenant une pluralité d'ensembles de pôles (20, 22, 24, 26) en matériau magnétique souple, conjointement avec des enroulements électriquement conducteurs, **caractérisé en ce qu'**un ensemble de pôles magnétiques (20) est fourni, au moins ledit ensemble de pôles magnétiques est asymétrique par rapport aux autres, ledit ensemble de pôles magnétiques étant fourni avec une zone à fentes plus grande qu'un ou plusieurs des autres ensembles.

12. Procédé de soutien d'un arbre selon la revendication 11, dans lequel l'ensemble de pôles magnétiques (20) est l'ensemble de pôles supérieur.

13. Procédé selon la revendication 11, dans lequel une densité de courant plus faible est appliquée à l'ensemble de pôles magnétiques, respectivement, à l'ensemble de pôles supérieur.
